# EUROPÄISCHE PATENTSCHRIFT

(11) **EP 1 664 566 B1**
(45) Veröffentlichungstag und Bekanntmachung des Hinweises auf die Patenterteilung: **16.04.2008**
(21) Anmeldenummer: 04764442.2
(22) Anmeldetag: 25.08.2004
(51) Int. Cl.: F16D 23/06, F16H 57/04

(54) **SYNCHRONKUPPLUNG FÜR EIN KRAFTFAHRZEUG-STUFENGETRIEBE**
SYNCHRONIZER CLUTCH FOR A MOTOR VEHICLE MULTISTEP REDUCTION GEAR
EMBRAYAGE DE SYNCHRONISATION POUR UN ENGRENAGE REDUCTEUR DE VEHICULE AUTOMOBILE

(30) Priorität: 19.09.2003 DE 10345350
(43) Veröffentlichungstag der Anmeldung: 07.06.2006
(73) Patentinhaber: HOERBIGER Synchron Technik GmbH & Co. KG, 71720 Oberstenfeld (DE)
(72) Erfinder: FINK, Stefan, 71720 Oberstenfeld (DE); HINK, Alexander, 74223 Flein (DE); PFANNSCHMIDT, Joern, 71691 Freiberg a. N. (DE)
(74) Vertreter: Schmitz, Hans-Werner
(86) Internationale Anmeldenummer: PCT/EP2004/009465
(87) Internationale Veröffentlichungsnummer: WO 2005/036008

(56) Entgegenhaltungen:
- DE-A- 19 542 735
- PATENT ABSTRACTS OF JAPAN Bd. 1995, Nr. 06, 31. Juli 1995 (1995-07-31) & JP 7 063250 A (AISIN EE I KK), 7. März 1995 (1995-03-07)
- PATENT ABSTRACTS OF JAPAN Bd. 0121, Nr. 37 (M-690), 26. April 1988 (1988-04-26) & JP 62 258243 A (NISSAN MOTOR CO LTD), 10. November 1987 (1987-11-10)

## Beschreibung

Die vorliegende Erfindung betrifft eine Synchronkupplung für ein Kraftfahrzeug-Stufengetriebe, mit einer Führungsmuffe, die an einer Welle festgelegt ist, und einem Synchronring, der in Bezug auf die Führungsmuffe beweglich gelagert ist.

Derartige Synchronkupplungen sind beispielsweise bekannt aus der Patent Abstracts of Japan, Bd. 1995, Nr. 06, 31. Juli 1995 (JP-A-07 063 250) und werden dazu verwendet, ein an einer Welle drehbar gelagertes Losrad mittels einer Schaltverzahnung formschlüssig mit der Welle zu verbinden bzw. diese Verbindung wieder zu trennen. Die JP-A-07063250 zeigt die Merkmale des Oberbegriffs der Ansprüche 1 und 2.

Derartige Anordnungen werden in Kraftfahrzeug-Stufengetrieben verwendet, die in Vorgelegebauweise ausgeführt sind. Das Kraftfahrzeug-Stufengetriebe weist dabei eine Mehrzahl von Radsätzen auf, die jeweils aus einem Festrad und einem Losrad bestehen. Die Radsätze stehen in ständigem Dreheingriff. Je nachdem, welches Losrad der verschiedenen Radsätze drehfest mit der zugeordneten Welle verbunden ist, werden in dem Kraftfahrzeug-Stufengetriebe unterschiedliche Übersetzungsverhältnisse eingerichtet.

Synchronkupplungen weisen gegenüber einfachen formschlüssigen Schaltkupplungen (wie z.B. Klauenkupplungen) die Besonderheit auf, dass Mittel vorgesehen sind, um die Drehzahlen von Losrad und Welle aneinander anzugleichen, bevor der Formschluss erzeugt wird. Sogenannte Sperr-Synchronkupplungen sind zudem so eingerichtet, dass das Herstellen des Formschlusses erst dann möglich ist, wenn die Drehzahlen weitgehend aneinander angeglichen sind.

Die Synchronkupplungen weisen in der Regel eine axial an der Führungsmuffe verschieblich gelagerte Schalt- bzw. Schiebemuffe auf, die eine innere Schaltverzahnung aufweist. An dem Losrad ist gewöhnlich ein Kupplungskörper festgelegt, der eine äußere Schaltverzahnung aufweist. Durch Verschieben der Schiebemuffe über den Kupplungskörper wird der Formschluss hergestellt, indem die Schaltverzahnungen ineinander greifen.

Zum Zwecke der Drehzahlsynchronisierung ist an dem Kupplungskörper eine kegelige Reibfläche vorgesehen. In entsprechender Weise ist an dem Synchronring, der zwischen Führungsmuffe und Kupplungskörper axial verschieblich gelagert ist, eine entsprechende kegelige Reibfläche vorgesehen.

Durch Verschieben der Schiebemuffe wird der Synchronring axial von der Führungsmuffe weg bewegt, so dass die Reibflächen sich berühren und demzufolge eine Drehzahlangleichung erfolgt.

Der Synchronring ist bei Sperr-Synchronkupplungen mit einer äußeren Sperrverzahnung versehen. Dabei ist der Synchronring in der Regel begrenzt gegenüber der Führungsmuffe drehbeweglich gelagert. Solange während eines Schaltvorganges keine Angleichung der Drehzahl erfolgt ist, ist der Synchronring auf Grund des Reibkontaktes mit dem Kupplungskörper gegenüber der inneren Schaltverzahnung der Schiebemuffe verdreht, so dass ein Durchschalten nicht möglich ist.

Erst wenn die Drehzahlen von Welle und Losrad zumindest weitgehend aneinander angeglichen sind, lässt sich der Synchronring durch die Schaltkraft wieder in eine Position verdrehen, die ein Durchschalten ermöglicht.

Bei Initiierung eines Schaltvorganges wird der Synchronring auf dem Reibkegel des Kupplungskörpers zentriert und dazu von der Führungsmuffe in axialer Richtung weg bewegt. Die dazu erforderliche Vorsynchronkraft wird durch spezielle Vorsynchroneinrichtungen auf den Synchronring aufgebracht. Die Vorsynchronkraft ist in ihrer Höhe beschränkt. Die Höhe der Vorsynchronkraft ist bei handbetätigten Schaltgetrieben zudem ein entscheidender Parameter des Komforts des Schaltvorganges.

Es hat sich nun gezeigt, dass gerade bei kaltem Getriebe die vom Fahrer aufgebrachte Schaltkraft nicht vollständig zum Aufbau der Vorsynchronkraft genutzt wird, die zur Aufbringung des Reibmomentes an den kegeligen Reibflächen erforderlich ist.

Dies führt zwangsläufig ab bestimmten Schaltgeschwindigkeiten zum Versagen der Vorsynchronisation und damit auch zu einem Versagen der Synchronisierung, was sich in einem Kratzen beim Schalten in einem noch nicht betriebswarmen Getriebe äußert.

Aus DE 195 42 735 A1 ist eine weitere Synchronkupplung bekannt, deren Synchronring mit Ausnehmungen zur Beölung von konischen Reibflächen versehen ist.

Es ist demzufolge die Aufgabe der vorliegenden Erfindung, eine verbesserte Synchronkupplung für ein Kraftfahrzeug-Stufengetriebe anzugeben, mit der das "Kaltkratzen" verbessert werden kann.

Diese Aufgabe wird durch eine Synchronkupplung für ein Kraftfahrzeug-Stufengetriebe gelöst, mit einer Führungsmuffe, die an einer Welle festgelegt ist, und einem Synchronring, der in Bezug auf die Führungsmuffe axial beweglich gelagert ist, wobei die Führungsmuffe eine axiale Anlagefläche aufweist, gegen die eine Axialfläche des Synchronrings anstoßen kann, wenn dieser in einer Ruheposition ist, wobei die axiale Anlagefläche und/oder die Axialfläche wenigstens eine Vertiefung aufweist, die gegenüber der Kontaktfläche eine Tiefe von mindestens 0,1 mm und von nicht mehr als 1,0 mm aufweist und für die generelle Funktion der Synchronkupplung keine Bedeutung besitzt, jedoch in der Ruheposition die Kontaktfläche zwischen axialer Anlagefläche und Axialfläche verringert, so dass bei einer Axialbewegung des Synchronrings weg von der Führungsmuffe im Wesentlichen keine Adhäsion auf Grund von Schmieröl auftritt.

Ferner wird die obige Aufgabe gelöst durch eine Synchronkupplung für ein Kraftfahrzeug-Stufengetriebe, mit einer Führungsmuffe, die an einer Welle festgelegt ist, und einem Synchronring, der in Bezug auf die Führungsmuffe beweglich gelagert ist, wobei die Führungsmuffe eine radiale Führungsfläche aufweist, die eine Radialfläche des Synchronrings führt, wobei die radiale Führungsfläche und/oder die Radialfläche wenigstens eine Vertiefung aufweist, die gegenüber der Kontaktfläche eine Tiefe von mindestens 0,1 mm und von nicht mehr als 1,0 mm aufweist und für die generelle Funktion der Synchronkupplung keine Bedeutung besitzt, jedoch die Kontaktfläche zwischen radialer Führungsfläche und Radialfläche verringert, so dass bei einer Bewegung des Synchronrings in Bezug auf die Führungsmuffe im Wesentlichen keine Adhäsion auf Grund von Schmieröl auftritt.

Die Erfindung basiert auf der Erkenntnis, dass die hohe Viskosität einiger Schmieröle bei der Initiierung des Schaltvorganges, insbesondere bei tieferen Temperaturen und geringen Spielverhältnissen zwischen Synchronring und Führungsmuffe, zu einer mehr oder weniger ausgeprägten Adhäsionswirkung zwischen diesen beiden Bauteilen führen kann. Dies wiederum vermindert die zur Aufbringung des Reibmomentes erforderliche Vorsynchronkraft und kann somit insbesondere ab bestimmten Schaltgeschwindigkeiten zum Versagen der Vorsynchronisation und damit auch zum Synchronversagen führen, was sich in einem Kratzen äußert.

Die Adhäsionswirkung lässt sich unter Beibehaltung aller übrigen Geometrieverhältnisse dadurch deutlich vermindern, indem man die einander zugewandten Flächen von Synchronring und Führungsmuffe mit wenigstens einer Vertiefung bzw. Profilierung versieht.

Die wenigstens eine Vertiefung bzw. Profilierung erfüllt den Zweck der Flächenreduzierung und unterstützt damit ein zügiges Nachfließen von Schmieröl und/oder Luft in den bei der Bewegung des Synchronringes zwischen Synchronring und Führungsmuffe freiwerdenden Bauraum.

Es hat sich gezeigt, dass bereits sehr geringe Tiefen der Vertiefung hinreichend sind, um die Adhäsionswirkung deutlich zu verringern. Durch die vergleichsweise geringe Tiefe der Vertiefungen kann zudem die Stabilität des jeweiligen Bauteils und dessen Festigkeit gewährleistet werden.

Die Vertiefung bzw. Profilierung kann entweder am Synchronring und/oder an der Führungsmuffe angebracht werden und erfüllt außer der oben beschriebenen Wirkung keine weitere Funktion. Die Form der Vertiefung bzw. Profilierung ist nahezu beliebig. Sie kann z.B. durch zurückgesetzte Flächen, Rillen, Absätze, Nocken, Nuten, Bohrungen etc. erreicht werden. Bereits bei geringen Profiltiefen wird eine große Verminderung der Adhäsionswirkung zwischen beiden Bauteilen erreicht.

Durch Verringerung der Adhäsionswirkung bzw. Anhangskraft kann die aufgebrachte Schaltkraft weitgehend vollständig in eine Vorsynchronkraft umgesetzt werden. Insgesamt wird die Lebensdauer der Schalt- und Sperrverzahnungen durch diese Maßnahme erhöht.

Zudem kann ggf. Öl mit geringerer Viskosität verwendet werden.

Auch lässt sich der Bauraum zwischen Führungsmuffe und Synchronring reduzieren. Die Funktion der Synchronisierung ist auch bei tieferen Temperaturen sichergestellt. Ferner ist die Funktion der Synchronisierung auch bei höheren Schaltgeschwindigkeiten sichergestellt.

Die Aufgabe wird demzufolge vollkommen gelöst.

Von besonderem Vorteil ist es, wenn die Kontaktfläche gegenüber einer Kontaktfläche ohne Vertiefung bzw. Profilierung um wenigstens 30 %, insbesondere um wenigstens 50 %, verkleinert ist.

Hierdurch wird die Adhäsionswirkung sicher verringert.

Gemäß einer weiteren insgesamt bevorzugten Ausführungsform weist die Kontaktfläche auf Grund der Vertiefung bzw. Profilierung keine durchgehenden Flächenabschnitte auf, die eine Längs- und eine Quererstreckung von jeweils mehr als 2 mm besitzen.

Durch die Maßnahme, die Vertiefung bzw. Profilierung so auszubilden, dass größere Kontaktflächenabschnitte mit Flächen von mehr als etwa 4 mm² vermieden werden, lässt sich die Adhäsionswirkung deutlich verringern.

Ferner ist es vorteilhaft, wenn eine Vielzahl von Vertiefungen vorgesehen ist, so dass sich die bislang durchgehende Kontaktfläche in eine Vielzahl kleinerer Kontaktflächenabschnitte unterteilen lässt, um die Adhäsionswirkung so insgesamt deutlich zu verringern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen schematischen Längsschnitt durch eine erfindungsgemäße Synchronkupplung;
- Fig. 2: einen schematischen Längsschnitt durch einen erfindungsgemäßen Synchronring; und
- Fig. 3: eine Draufsicht auf die Rückseite eines erfindungsgemäßen Synchronringes.

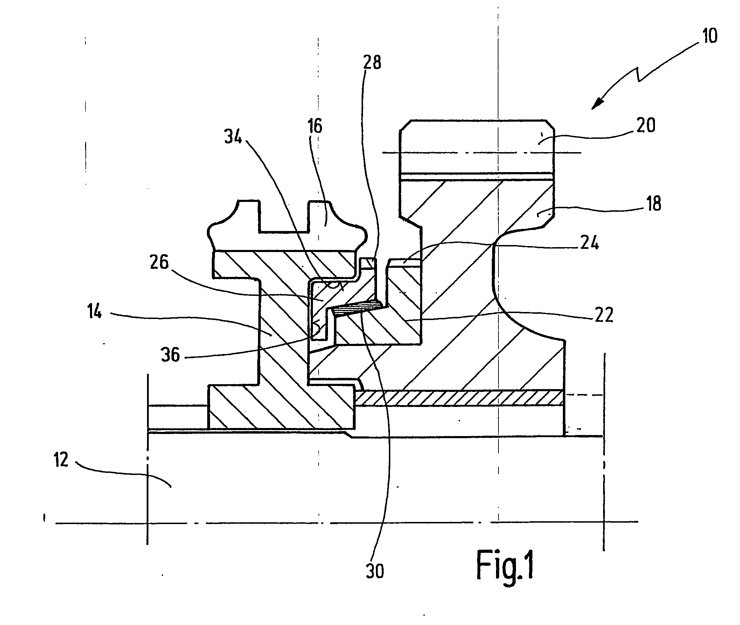

In Fig. 1 ist in schematischer Darstellung eine Synchronkupplung für ein Kraftfahrzeug-Stufengetriebe generell mit 10 bezeichnet.

Die Synchronkupplung 10 ist an einer Welle 12 gelagert. An der Welle 12 ist eine Führungsmuffe 14 der Synchronkupplung 10 in axialer Richtung wie in Drehrichtung festgelegt.

An der Führungsmuffe 14 ist eine Schiebemuffe 16 axial beweglich gelagert. Die Schiebemuffe 16 weist eine in Fig. 1 nicht näher dargestellte innere Schaltverzahnung auf. Die Schiebemuffe 16 weist ferner eine äußere Umfangsnut auf, in die eine Schaltgabel o.ä. zum Verschieben der Schiebemuffe 16 eingreifen kann.

Die Synchronkupplung 10 dient dazu, ein generell drehbar an der Welle 12 gelagertes, eine Außenverzahnung 20 aufweisendes Zahnrad 18 (Losrad) formschlüssig mit der Welle 12 zu verbinden bzw. diese Verbindung zu trennen.

Zu diesem Zweck beinhaltet die Synchronkupplung 10 einen Kupplungskörper 22, der mit dem Zahnrad 18 fest verbunden ist und eine äußere Schaltverzahnung 24 aufweist.

Bei Verschieben der Schiebemuffe 16 in Richtung hin zu dem Kupplungskörper 22 greifen deren Schaltverzahnungen ineinander, um so die Welle 12 und das Zahnrad 18 drehfest miteinander zu verbinden.

Zum Zwecke der Drehzahlangleichung von Welle 12 und Zahnrad 18 vor Herstellen des Formschlusses ist ein Synchronring 26 vorgesehen, der generell zwischen der Führungsmuffe 14 und dem Kupplungskörper 22 gelagert ist.

Der Synchronring 26 weist außenumfänglich eine Sperrverzahnung 28 auf und ist am Innenumfang mit einer kegeligen Reibfläche versehen, die mit einer entsprechenden kegeligen Reibfläche des Kupplungskörpers 22 eine Reibpaarung 30 bildet.

Der generelle Aufbau derartiger Synchronkupplungen 10, wie oben beschrieben, ist allgemein bekannt. Anstelle einer einzelnen Reibpaarung sind auch Synchronkupplungen mit mehreren Reibpaarungen (z.B. Doppel- oder Mehrkonus-Synchronkupplungen) bekannt.

Die Führungsmuffe 14 wird in der Literatur häufig auch als Synchronkörper bezeichnet.

Die Führungsmuffe 14 weist eine radiale Führungsfläche 34 und eine axiale Anlagefläche 36 auf.

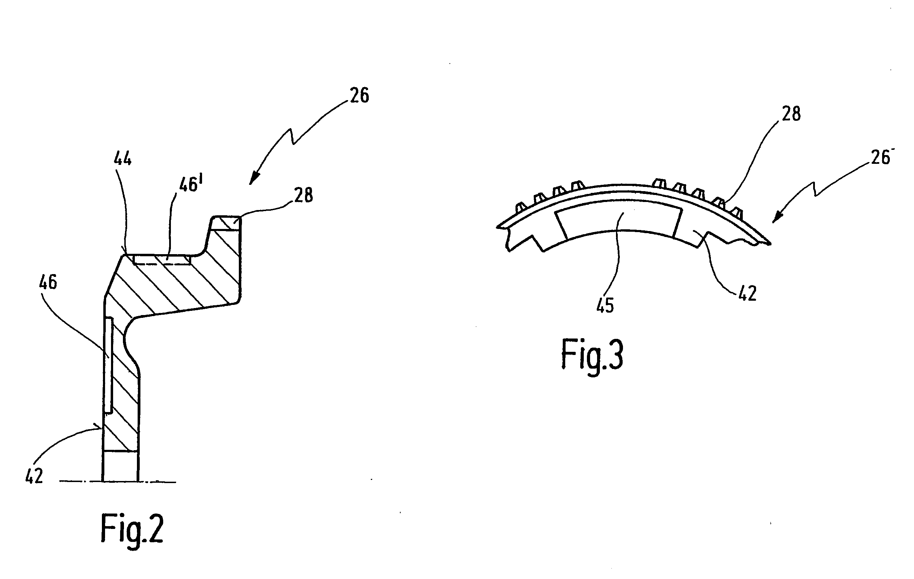

In entsprechender Weise, wie es in Fig. 2 gezeigt ist, weist der Synchronring 26 eine rückseitige Axialfläche 42 auf, die an die axiale Anlagefläche 36 anstoßen kann, sowie eine außenseitige Radialfläche 44, die von der radialen Führungsfläche 34 geführt wird.

Generell ist der Synchronring 26 in einer Ruheposition, dann also, wenn die Synchronkupplung 10 nicht betätigt ist, in axialer als auch in radialer Richtung innerhalb seines Aufenthaltsbereiches frei beweglich gelagert, der im Wesentlichen durch die Flächen der Führungsmuffe 14 definiert ist, d.h. die radiale Führungsfläche 34 und die axiale Anlagefläche 36.

Bei anderen Ausführungsformen kann der Synchronring auch eine konisch verlaufende Fläche am Außenumfang aufweisen, und die Führungsmuffe 14 kann eine entsprechende konische Anlage- bzw. Führungsfläche aufweisen.

Die Flächen können sowohl gerade als auch gekrümmt ausgebildet sein.

Wie es in den Fig. 2 und 3 gezeigt ist, ist der Synchronring 26 an seiner rückseitiger Axialfläche 42 mit einer Mehrzahl von umfänglich verteilten, jeweils flächig ausgebildeten Vertiefungen 46 versehen. Von der Mehrzahl von umfänglich verteilten Vertiefungen 46 ist in den Fig. 2 und 3 jeweils nur eine dargestellt.

Durch die Vertiefungen 46 wird die Kontaktfläche zwischen axialer Anlagefläche 36 und rückseitiger Axialfläche 42 verkleinert. Hierdurch werden Adhäsionseffekte verringert, die auf Grund großflächiger Anlage zwischen diesen beiden Flächen herkömmlicherweise auftreten können. Hierdurch können Schaltkräfte weitgehend unmittelbar in die erforderlichen Vorsynchronkräfte umgesetzt werden.

Es versteht sich, dass entsprechende Vertiefungen 46 alternativ oder akkumulativ an der axialen Anlagefläche 36 vorgesehen sein können, obgleich dies in den Figuren nicht näher dargestellt ist.

Entscheidend ist, dass durch die Vertiefungen 46 die Kontaktfläche keine durchgehenden Flächenabschnitte aufweist, die eine größere flächige Ausdehnung besitzen, beispielsweise keine Flächenabschnitte, die eine Längs- und eine Quererstreckung von jeweils mehr als 2 mm besitzen.

In Fig. 2 ist ferner dargestellt, dass auch an der außenseitigen Radialfläche 44 eine Vertiefung bzw. eine Mehrzahl von Vertiefungen 46' vorgesehen sein kann. Auch derartige radiale Vertiefungen können die Adhäsioneffekte verringern. Dabei versteht sich, dass entsprechende radiale Vertiefungen alternativ oder akkumulativ auch an der radialen Führungsfläche 34 ausgebildet sein können.

Ferner versteht sich, dass anstelle von flächigen Vertiefungen (d.h. zurückgesetzten Flächen) eine Verkleinerung der Kontaktfläche auch durch andere Arten der Profilierung der Flächen 34, 36, 42 und/oder 44 erreicht werden können, beispielsweise durch Rillen, Absätze, Nocken, Nuten, Bohrungen etc.

Die Tiefe der Vertiefungen bzw. Profilierungen kann relativ gering sein, um die Festigkeit der betroffenen Bauteile nicht einzuschränken, beispielsweise in einem Bereich von mindestens 0,1 mm, und vorzugsweise von nicht mehr als 1,0 mm.

Generell wird durch die Vertiefungen 46, 46' bzw. Profilierungen die Kontaktfläche gegenüber einer Kontaktfläche ohne derartige Vertiefungen/Profilierungen um wenigstens 30 %, insbesondere um wenigstens 50 %, verkleinert.

Vorzugsweise beträgt die gesamte Vertiefungsfläche zwischen 30 % ... 50 % der jeweiligen Kontaktfläche.

## Patentansprüche

1. Synchronkupplung (10) für ein Kraftfahrzeug-Stufengetriebe, mit einer Führungsmuffe (14), die an einer Welle (12) festgelegt ist, und einem Synchronring (26), der in Bezug auf die Führungsmuffe (14) axial beweglich gelagert ist, **dadurch gekennzeichnet, dass** die Führungsmuffe (14) eine axiale Anlagefläche (36) aufweist, gegen die eine Axialfläche (42) des Synchronrings (26) anstoßen kann, wenn dieser in einer Ruheposition ist, wobei die axiale Anlagefläche (36) und/oder die Axialfläche (42) wenigstens eine Vertiefung (46) aufweist, die gegenüber der Kontaktfläche eine Tiefe von mindestens 0,1 mm und von nicht mehr als 1 mm aufweist und für die generelle Funktion der Synchronkupplung (10) keine Bedeutung besitzt, jedoch in der Ruheposition die Kontaktfläche zwischen axialer Anlagefläche (36) und Axialfläche (42) verringert, so dass bei einer Axialbewegung des Synchronrings (26) weg von der Führungsmuffe (14) im wesentlichen keine Adhäsion aufgrund von Schmieröl auftritt.

2. Synchronkupplung (10) für ein Kraftfahrzeug-Stufengetriebe, mit einer Führungsmuffe (14), die an einer Welle (12) festgelegt ist, und einem Synchronring (26), der in Bezug auf die Führungsmuffe (14) beweglich gelagert ist, **dadurch gekennzeichnet, dass** die Führungsmuffe (14) eine radiale Führungsfläche (34) aufweist, die eine Radialfläche (44) des Synchronrings (26) führt, wobei die radiale Führungsfläche (34) und/oder die Radialfläche (44) wenigstens eine Vertiefung (46') aufweist, die gegenüber der Kontaktfläche eine Tiefe von mindestens 0,1 mm und von nicht mehr als 1,0 mm aufweist und für die generelle Funktion der Synchronkupplung (10) keine Bedeutung besitzt, jedoch die Kontaktfläche zwischen radialer Führungsfläche (34) und Radialfläche (44) verringert, so dass bei einer Bewegung des Synchronrings (26) in Bezug auf die Führungsmuffe (14) im Wesentlichen keine Adhäsion aufgrund von Schmieröl auftritt.

3. Synchronkupplung nach Anspruch 1 oder 2, **dadurch gekennzeichnet, dass** die Kontaktfläche gegenüber einer Kontaktfläche ohne Vertiefung (46; 46') um wenigstens 30 %, insbesondere um wenigstens 50 % verkleinert ist.

4. Synchronkupplung nach einem der Ansprüche 1 - 3, **dadurch gekennzeichnet, dass** die Kontaktfläche auf Grund der Vertiefung (46; 46') keine durchgehenden Flächenabschnitte aufweist, die eine Längs- und eine Quererstreckung von jeweils mehr als 2 mm besitzen.

5. Synchronkupplung nach einem der Ansprüche 1 - 4, **dadurch gekennzeichnet, dass** eine Vielzahl von Vertiefungen (46; 46') vorgesehen ist.

## Claims

1. Synchronizer clutch (10) for a motor vehicle multi-stage transmission, having a guide sleeve (14), which is fixed to a shaft (12), and a synchronizer ring (26), which is mounted such that it can move axially in relation to the guide sleeve (14), **characterized in that** the guide sleeve (14) has an axial contact face (36) against which an axial face (42) of the synchronizer ring (26) can abut when the latter is in a rest position, the axial contact face (36) and/or the axial face (42) having at least one depression (46) which, as compared with the contact area, has a depth of at least 0.1 mm and of not more than 1 mm and is of no significance in terms of the general function of the synchronizer clutch (10) but, in the rest position, reduces the contact area between axial contact face (36) and axial face (42), so that, during an axial movement of the synchronizer ring (26) away from the guide sleeve (14), substantially no adhesion occurs because of lubricating oil.

2. Synchronizer clutch (10) for a motor vehicle multi-stage transmission, having a guide sleeve (14), which is fixed to a shaft (12), and a synchronizer ring (26), which is mounted such that it can move in relation to the guide sleeve (14), **characterized in that** the guide sleeve (14) has a radial guide face (34) which guides a radial face (44) of the synchronizer ring (26), the radial guide face (34) and/or the radial face (44) having at least one depression (46') which, as compared with the contact area, has a depth of at least 0.1 mm and of not more than 1 mm and is of no significance in terms of the general function of the synchronizer clutch (10) but reduces the contact area between radial guide face (34) and radial face (44), so that, during a movement of the synchronizer ring (26) relative to the guide sleeve (14), substantially no adhesion occurs because of lubricating oil.

3. Synchronizer clutch according to Claim 1 or 2, **characterized in that** the contact area is reduced by at least 30%, in particular by at least 50%, as compared with a contact area without a depression (46; 46').

4. Synchronizer clutch according to one of Claims 1 - 3, **characterized in that**, because of the depression (46; 46'), the contact area has no continuous area sections which have a longitudinal and a transverse extent of more than 2 mm in each case.

5. Synchronizer clutch according to one of Claims 1 - 4, **characterized in that** a large number of depressions (46; 46') is provided.

## Revendications

1. Accouplement synchrone (10) pour un engrenage réducteur de véhicule, comprenant un manchon de guidage (14), qui est fixé sur un arbre (12), et une bague synchrone (26), qui est montée déplaçable axialement par rapport au manchon de guidage (14), **caractérisé en ce que** le manchon de guidage (14) présente une surface d'appui (36) axiale, contre laquelle une surface axiale (42) de la bague synchrone (26) peut buter lorsque celle-ci est dans une position de repos, la surface d'appui (36) axiale et/ou la surface axiale (42) présentant au moins une cavité (46) qui présente par rapport à la surface de contact une profondeur d'au moins 0,1 mm et inférieure à 1 mm et ne revêt pas d'importance pour la fonction générale de l'accouplement synchrone (10), mais réduit dans la position de repos la surface de contact entre la surface d'appui (36) axiale et la surface axiale (42) de sorte que, lors d'un déplacement axial de la bague synchrone (26) à partir du manchon de guidage (14), il n'apparaît pratiquement pas d'adhésion du fait de l'huile lubrifiante.

2. Accouplement synchrone (10) pour un engrenage réducteur de véhicule, comprenant un manchon de guidage (14), qui est fixé sur un arbre (12), et une bague synchrone (26), qui est montée déplaçable par rapport au manchon de guidage (14), **caractérisé en ce que** le manchon de guidage (14) présente une surface de guidage (34) radiale qui guide une surface radiale (44) de la bague synchrone (26), la surface de guidage (34) radiale et/ou la surface radiale (44) présentant au moins une cavité (46'), qui présente par rapport à la surface de contact une profondeur supérieure à 0,1 mm et inférieure à 1,0 mm et ne revêt pas d'importance pour la fonction générale de l'accouplement synchrone (10), mais réduit la surface de contact entre la surface de guidage (34) radiale et la surface radiale (44), de sorte que, lors d'un déplacement de la bague synchrone (26) par rapport au manchon de guidage (14), il n'apparaît pratiquement pas d'adhésion en raison de l'huile lubrifiante.

3. Accouplement synchrone selon la revendication 1 ou 2, **caractérisé en ce que** la surface de contact est réduite d'au moins 30 %, en particulier d'au moins 50 % par rapport à une surface de contact sans cavité (46 ; 46').

4. Accouplement synchrone selon l'une quelconque des revendications 1 à 3, **caractérisé en ce que** la surface de contact ne présente pas de parties de surface continues, du fait de la cavité (46 ; 46'), qui présentent une extension longitudinale et une extension transversale de plus de 2 mm chacune.

5. Accouplement synchrone selon l'une quelconque des revendications 1 à 4, **caractérisé en ce qu'**il est prévu une pluralité de cavités (46 ; 46').
